# EUROPÄISCHE PATENTSCHRIFT

(11) **EP 3 244 074 B1**
(45) Veröffentlichungstag und Bekanntmachung des Hinweises auf die Patenterteilung: **14.08.2019**
(21) Anmeldenummer: 17163333.2
(22) Anmeldetag: 28.03.2017
(51) Int. Cl.: F16B 5/02, F16B 2/24

(54) **VORRICHTUNG ZUM FESTLEGEN AN EINEM BAUTEIL**
DEVICE FOR FIXING ON A COMPONENT
DISPOSITIF DE FIXATION SUR UN COMPOSANT

(30) Priorität: 12.05.2016 DE 102016208179
(43) Veröffentlichungstag der Anmeldung: 15.11.2017
(73) Patentinhaber: Springfix Befestigungstechnik GmbH, 73084 Salach (DE)
(72) Erfinder: Ecker, Rainer, 73033 Göppingen (DE); Bernauer, Jana, 73230 Kirchheim unter Teck (DE)
(74) Vertreter: Patent- und Rechtsanwälte Ullrich & Naumann

(56) Entgegenhaltungen:
- DE-C1- 19 945 295
- DE-U1-202008 011 318
- US-B1- 6 357 953

## Beschreibung

Die vorliegende Erfindung betrifft eine Vorrichtung zum Festlegen an einem Bauteil, insbesondere Toleranz-Ausgleichs-Element, mit einer ersten Hülse und einer an und/oder in der ersten Hülse mittels einer Schraubverbindung festlegbaren zweiten Hülse, wobei die erste Hülse und die zweite Hülse jeweils einen Durchgang aufweisen, wobei eine Schraube durch die Durchgänge und vorzugsweise durch das Bauteil hindurch in ein Gewinde eines Haltemittels einschraubbar ist, wobei sich die Drehrichtung des Gewindes der Schraubverbindung von der Drehrichtung des Haltemittels unterscheidet und wobei eine mit der Schraube und der zweiten Hülse zusammenwirkende Mitnahmeeinrichtung in den Durchgängen angeordnet ist.

Vorrichtungen der in Rede stehenden Art sind seit Jahren aus der Praxis bekannt und dienen beispielsweise der Fixierung von zwei Bauteilen, deren Abstand zueinander schwanken kann. Entsprechende Toleranz-Ausgleichs-Elemente werden beispielsweise zur Montage von Schweinwerfern in einem Kraftfahrzeug verwendet.

Bei den bekannten Vorrichtungen wird mit dem Eindrehen der Schraube in das Gewinde des Haltemittels die zweite Hülse aufgrund einer Mitnahmeeinrichtung, die die Schraube und die zweite Hülse verbindet, ebenfalls gedreht. Die Mitnahmeeinrichtung ist dabei als Federstahlklemme ausgebildet, die gegen die eingesteckte Schraube drückt. Durch die gegensinnige Drehrichtung der Schraubverbindung und des Gewindes des Haltemittels wird mit dem Eindrehen der Schraube die zweite Hülse aus der ersten Hülse herausgeschraubt. Somit ermöglicht diese Konstruktion einen Toleranzausgleich bei der Fixierung von zwei Bauteilen, deren Abstand zueinander nicht eindeutig bestimmt ist.

Entsprechende Vorrichtungen sind beispielsweise aus der FR 2 792 039 B1 und der DE 100 34 968 A1, sowie der US 6 357 953 B1 vorbekannt.

Die Hülsen der bekannten Vorrichtungen werden üblicherweise ineinander geschraubt und die Vorrichtung in diesem Zustand ausgeliefert. Dabei ist problematisch, dass bei einigen der Vorrichtungen die Hülsen während des Transports mehr oder weniger weit auseinander bzw. ineinander geschraubt werden, so dass der Abstand zwischen den Hülsen variiert. Dies ist insbesondere bei der Fließfertigung problematisch, da eine exakte Definition der Arbeitsschritte unter diesen Voraussetzungen nicht möglich ist. Insofern ist es notwendig, die Vorrichtungen vor dem Einbau dahingehend zu überprüfen, dass der Abstand der Hülsen einem vorgegebenen Wert entspricht. Die Handhabung der bekannten Vorrichtungen ist daher äußerst zeitaufwändig und kostenintensiv.

Der vorliegenden Erfindung liegt daher die Aufgabe zugrunde, eine Vorrichtung der eingangs genannten Art derart auszugestalten und weiterzubilden, dass mit konstruktiv einfachen Mitteln die Handhabung vereinfacht ist.

Erfindungsgemäß wird die voranstehende Aufgabe durch die Merkmale des Anspruches 1 gelöst. Danach ist die in Rede stehende Vorrichtung dadurch gekennzeichnet, dass die Mitnahmeeinrichtung durch Einbringen der Schraube in die Durchgänge von einer die Drehung der Hülsen sperrende Sicherungsstellung in eine die Drehung der Hülsen freigebende Öffnungsstellung verbringbar ist.

In erfindungsgemäßer Weise ist zunächst erkannt worden, dass die Handhabung der Vorrichtung in überraschend einfacher Weise durch die Anordnung einer Verdrehsicherung verbessert werden kann. Dabei ist in raffinierter Weise die Mitnahmeeinrichtung derart ausgestaltet, dass sie zusätzlich als Verdrehsicherung dient, nämlich die erste Hülse und die zweite Hülse in einer vorgegebenen Position hält, in der die Hülsen ineinander geschraubt sind.

Dazu ist die Mitnahmeeinrichtung in erfindungsgemäßer Weise derart ausgestaltet, dass sie in einer Grundposition eine Sicherungsstellung einnimmt, nämlich die Drehung der Hülsen sperrt. Dabei ist der Begriff "sperren" im weitesten Sinne zu verstehen, soll ein Verdrehen der Hülsen gegeneinander nämlich zumindest gehemmt sein, so dass sich die Hülsen während eines Transports nicht in- bzw. auseinander drehen. In weiter erfindungsgemäßer Weise ist erkannt worden, dass die Handhabung der Vorrichtung besonders einfach ist, wenn die Mitnahmeeinrichtung durch Einbringen der Schraube in die Durchgänge von der Sicherungsstellung in eine die Drehung der Hülsen freigebenden Öffnungsstellung verbringbar ist. Somit erfolgt ein Lösen der Verdrehsicherung automatisch während des Festlegens der Vorrichtung an dem Bauteil, indem die Schraube in die Durchgänge eingebracht wird.

Bei der erfindungsgemäßen Vorrichtung dient die Mitnahmeeinrichtung in bekannter Weise dazu, die zweite Hülse während des Eindrehens der Schraube in das Haltemittel aus der ersten Hülse herauszudrehen. In erfindungsgemäßer Weise ist die Mitnahmeeinrichtung des Weiteren derart ausgebildet, dass sie als Transportsicherung dient, so dass die Hülsen in einem definierten Zustand bzw. Abstand zueinander gehalten werden.

Im Konkreten greift ein Sicherungsabschnitt der Mitnahmeeinrichtung in der Sicherungsstellung durch eine Öffnung einer der Hülsen hindurch in eine Ausnehmung der anderen Hülse ein. Beispielsweise kann die Mitnahmeeinrichtung innerhalb des Durchgangs der zweiten Hülse angeordnet sein, so dass der Sicherungsabschnitt durch eine Öffnung der zweiten Hülse in eine Ausnehmung der ersten Hülse eingreift und die Drehung der Hülsen gegeneinander blockiert. Durch die in den Durchgang bzw. die Durchgänge eingeführt Schraube kann der Sicherungsabschnitt aus der Ausnehmung ausgebracht, insbesondere herausgezogen, werden

In vorteilhafter Weise ragt ein Bereich der Mitnahmeeinrichtung in der Sicherungsstellung radial in die Durchgänge bzw. den Durchgang hinein und ist durch Einbringen der Schraube radial nach außen biegbar. Durch dieses "Aufbiegen" der Mitnahmeeinrichtung wird der Sicherungsabschnitt aus der Ausnehmung - beispielsweise der ersten Hülse - herausgezogen, so dass eine Drehbewegung möglich ist. Des Weiteren kann die Mitnahmeeinrichtung derart ausgebildet sein, dass der Sicherungsabschnitt aus der Ausnehmung sowie der Öffnung herausziehbar ist. Im Konkreten kann der Bereich durch zwei oder drei Segmente der Mitnahmeeinrichtung gebildet sein, wobei sich die Segmente jeweils von der Wandung des Durchgangs radial nach innen erstrecken.

Um eine sichere Fixierung der Mitnahmeeinrichtung innerhalb der Durchgänge sowie des Sicherungsabschnitts zu gewährleisten, kann die Mitnahmeeinrichtung unter Vorspannung in den Durchgängen beziehungsweise dem Durchgang angeordnet sein. Mit anderen Worten kann die Mitnahmeeinrichtung im Sinne eines vorgespannten Federelements verwirklicht sein, wobei ein Endbereich - Sicherungsabschnitt - des Federelements in der Sicherungsstellung in beide Hülsen eingreift und somit die Drehbewegung hemmt.

Um die zweite Hülse aus der ersten Hülse herauszuschrauben, kann die Mitnahmeeinrichtung in der Öffnungsstellung kraftschlüssig mit der Schraube verbunden sein. Durch die Dimensionierung und/oder Geometrie und/oder Materialwahl der Mitnahmeeinrichtung kann dabei das Drehmoment einstellbar sein, bei welchem die Verbindung zwischen Schraube und zweiter Hülse aufgehoben wird. Dieses Drehmoment definiert, mit welcher Vorspannung die Vorrichtung zwischen zwei Bauteilen anordenbar ist.

In besonders vorteilhafter Weise kann die Mitnahmeeinrichtung aus einem elastischen Material hergestellt sein. Dadurch kann die Mitnahmeeinrichtung durch Einführen der Schraube radial an die Wandung des Durchgangs gepresst werden, so dass der Sicherungsabschnitt aus der Ausnehmung herausgezogen wird. Im Konkreten kann es sich bei dem elastischen Material um Metall, beispielsweise Federstahl, handeln. Alternativ kann die Mitnahmeeinrichtung aus einem plastisch deformierbaren Material, beispielsweise aus einem Kunststoff, hergestellt sein. Durch das Einführen der Schraube ist die Mitnahmeeinrichtung plastisch verformbar und gibt die Sperrung der Drehbewegung der Hülsen frei.

Eine besonders einfache und kostengünstige Konstruktion der Mitnahmeeinrichtung ist realisierbar, indem die Mitnahmeeinrichtung aus einem Blech hergestellt ist. Das Blech kann dabei derart umgeformt sein, dass die Mitnahmeeinrichtung in der Grundposition, dass heißt der Sicherungsstellung, unter Vorspannung in dem Durchgang beziehungsweise den Durchgängen gehalten ist und der Sicherungsabschnitt durch die Öffnung hindurch in die Ausnehmung gepresst wird. Alternativ oder zusätzlich kann die Mitnahmeeinrichtung aus mehreren Segmenten bestehen, wobei zumindest einige der Segmente geradlinig bzw. geradwandig ausgebildet sein können. Die Segmente können durch einen Knick voneinander getrennt sein. Dabei ist unter einem "Knick" der Bereich der Mitnahmeeinrichtung, insbesondere eines Blechs, zu verstehen, an dem die Mitnahmeeinrichtung gebogen ist, somit die Richtung ändert, in der sie verläuft. Dadurch lassen sich auf einfache Weise unterschiedliche Geometrien realisieren. Wesentlich ist lediglich, dass der Sicherungsabschnitt in der Sicherungsstellung, d.h. wenn keine Schraube in dem Durchgang eingebracht ist, in die Ausnehmung eingreift und in der Öffnungsstellung aus der Ausnehmung ausgebracht ist. An dieser Stelle sei darauf hingewiesen, dass eine segmentierte Mitnahmeeinrichtung aus einem beliebigen elastischen Material hergestellt sein kann und es sich dabei nicht zwangsweise um ein Blech handeln muss.

In weiter vorteilhafter Weise kann an einer der Hülsen, insbesondere an der zweiten Hülse, zumindest ein Haltebereich ausgebildet sein, um die Mitnahmeeinrichtung axial in der zweiten Hülse zu fixieren. Dabei ist denkbar, dass an dem dem Bauteil zugewandten Ende der Hülse ein radial nach innen verlaufender Rand beziehungsweise Steg ausgebildet ist, auf dem die Mitnahmeeinrichtung aufliegt. Alternativ oder zusätzlich kann an dem dem Bauteil abgewandten Ende der Hülse ein Vorsprung, beispielsweise eine Nase, ausgebildet sein.

In besonders vorteilhafter Weise kann an der Mitnahmeeinrichtung zumindest bereichsweise eine radial nach außen gerichtete Wölbung ausgebildet sein. Die Wölbung kann insbesondere an dem Segment der Mitnahmeeinrichtung ausgebildet sein, das unterhalb eines Haltebereichs, beispielsweise einer Nase, angeordnet ist und dient als Einführhilfe für die Schraube.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen, geschnittenen Darstellung ein Ausführungsbeispiel einer erfindungsgemäßen Vorrichtung,
- Fig. 2: in einer schematischen, entlang der Linie C-C geschnittenen Darstellung das Ausführungsbeispiel gemäß Fig. 1 und
- Fig. 3: in einer weiteren schematischen, entlang der Linie D-D geschnittenen Darstellung das Ausführungsspiel gemäß Figur 2.

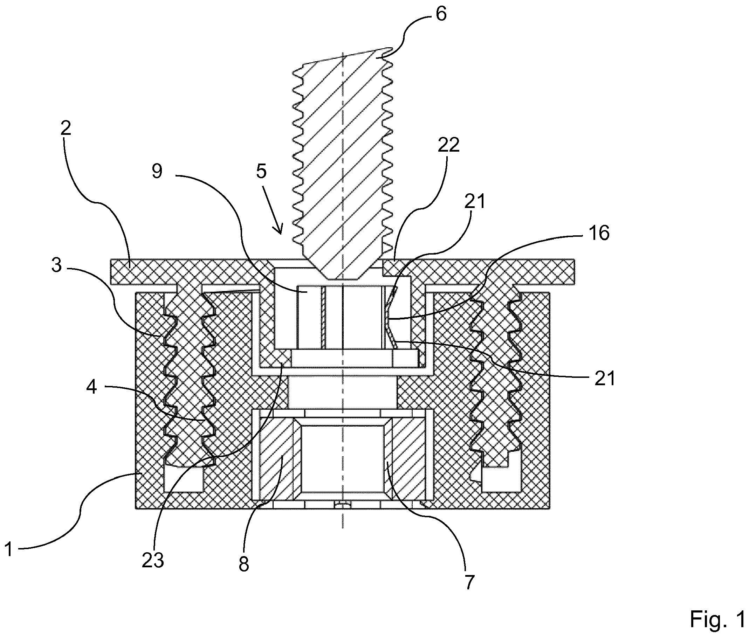

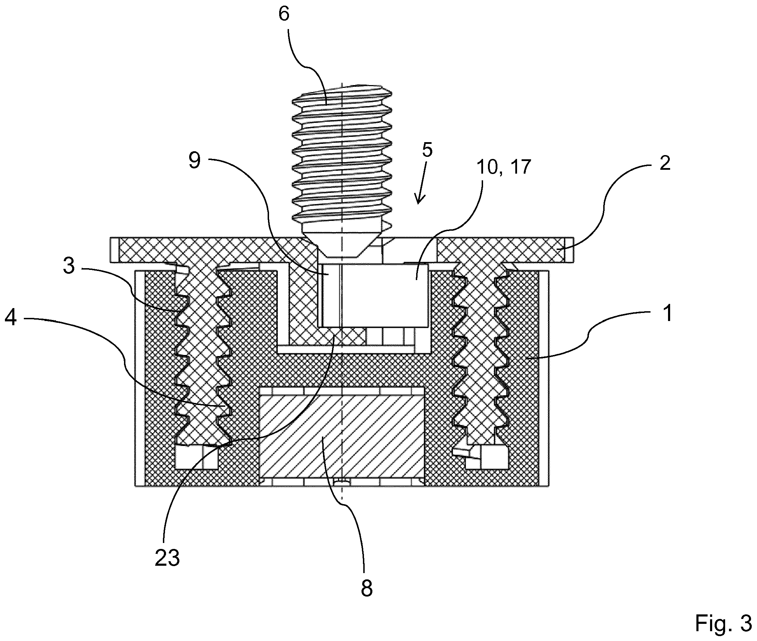

In den Figuren 1 bis 3 ist ein Ausführungsbeispiel einer erfindungsgemäßen Vorrichtung gezeigt. Die Vorrichtung umfasst eine erste Hülse 1 und eine an beziehungsweise in der ersten Hülse 1 festlegbare zweiten Hülse 2. Die erste Hülse 1 und die zweite Hülse 2 weißen jeweils ein erstes Gewinde 3 und ein zweites Gewinde 4 auf. Durch die ersten und zweiten Gewinde 3, 4 ist eine Schraubverbindung realisiert. An dieser Stelle sei ausdrücklich darauf hingewiesen, dass die erste Hülse 1 und die zweite Hülse 2 jeweils lediglich ein Gewinde 3, 4 oder auch mehr als zwei miteinander korrespondierenden Gewinde 3, 4 aufweisen können.

Durch die Ausbildung von jeweils zwei Gewinden 3, 4, über welche die erste Hülse 1 mit der zweiten Hülse 2 verbindbar ist, werden die auf die Hülsen 1, 2 und somit auf die Gewinde 3, 4 wirkenden Kräfte und Drehmomente in idealer Weise verteilt. Dadurch ist die Vorrichtung insgesamt sehr kompakt und es ist möglich, die erste Hülse 1 und die zweite Hülse 2 aus einem Kunststoff herzustellen. Die Herstellung der ersten und zweiten Hülse 1, 2 kann beispielsweise im Spritzgussverfahren erfolgen.

Durch den Durchgang 5 ist eine Schraube 6 in ein Gewinde 7 eines Haltemittels 8, beispielsweise einer Mutter einschraubbar. Dabei unterscheidet sich die Drehrichtung des ersten Gewindes 3 und zweiten Gewindes 4 gegenüber der Drehrichtung des Gewindes 6 von dem Haltemittel 7.

Des Weiteren ist innerhalb der zweiten Hülse 2 eine Mitnahmeeinrichtung 9 angeordnet. Die Mitnahmeeinrichtung 9 umfasst in diesem Ausführungsbeispiel sieben Segmenten 10, 11, 12, 13, 14, 15, 16. In den Figuren 1 bis 3 ist die Mitnahmeeinrichtung 9 in der Sicherungsstellung dargestellt, in der die Schraube 6 nicht in den Durchgang 5 eingebracht ist. In der Sicherungsstellung erstreckt sich das als Sicherungsabschnitt 17 dienende Segment 10 durch eine Öffnung 18 der zweiten Hülse 2 in eine Ausnehmung 12 der ersten Hülse 1 hinein. In dieser Sicherungsstellung sind die beiden Hülsen 1, 2 drehfest zueinander angeordnet.

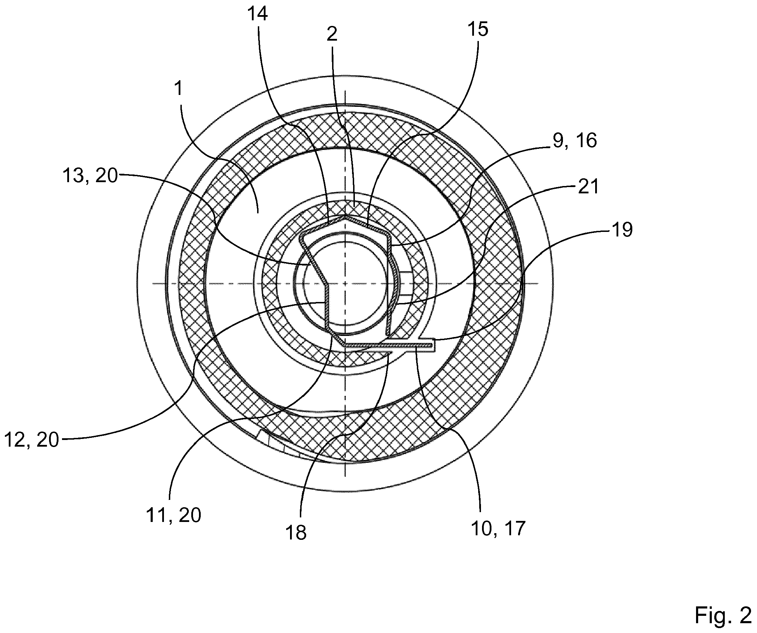

Insbesondere in Figur 2 ist gezeigt, dass ein durch die Segmente 11, 12, 13 gebildeter Bereich 20 der Mitnahmeeinrichtung 9 in der Sicherungsstellung radial in die Durchgänge 5 hineinragt. Mit Einbringen der Schraube 6 in den Durchgang 5 wird zumindest der Bereich 20 radial nach außen verschoben, so dass der Sicherungsabschnitt 17 aus der Ausnehmung 12 der ersten Hülse 1 und ggf. der Öffnung 18 der zweiten Hülse 2 herausgezogen wird. In diesem Zustand befindet sich die Mitnahmeeinrichtung 9 in der Öffnungsstellung, in welcher ein Verdrehen der Hülsen 1, 2 gegeneinander möglich ist. Des Weiteren liegen die Segmente 11, 12, 13 des Bereichs 20 zumindest teilweise kraftschlüssig an der Schraube 6 an, so dass die zweite Hülse 2 durch eine Drehbewegung der Schraube 6 aus der ersten Hülse 1 herausschraubbar ist.

Aus den Figuren 1 und 2 geht des Weiteren hervor, dass das Segment 16 an den in Axialrichtung gesehenen oberen und unteren Enden jeweils eine radial nach außen gerichtete Wölbung 21 aufweist. Die Wölbung 21 ist unterhalb eines ersten Haltebereichs 22 angeordnet. Der erste Haltebereich 22 ist als radial in den Durchgang 5 hineinragende Nase ausgebildet. Des Weiteren ist ein zweiter Haltebereich 23 innerhalb der zweiten Hülse 2 vorgesehen, der die Mitnahmeeinrichtung 9 ebenfalls in Axialrichtung fixiert. Die Wölbungen 21 dienen als Einführhilfe für die Schraube 6, sind jedoch für die erfindungsgemäße Vorrichtung nicht zwingend notwendig.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: erste Hülse
- 2: zweite Hülse
- 3: erstes Gewinde
- 4: zweites Gewinde
- 5: Durchgang
- 6: Schraube
- 7: Gewinde (Haltemittel)
- 8: Haltemittel
- 9: Mitnahmeeinrichtung
- 10: Segment
- 11: Segment
- 12: Segment
- 13: Segment
- 14: Segment
- 15: Segment
- 16: Segment
- 17: Sicherungsabschnitt
- 18: Öffnung
- 19: Ausnehmung
- 20: Bereich
- 21: Wölbung

## Patentansprüche

1. Vorrichtung zum Festlegen an einem Bauteil, insbesondere Toleranz-Ausgleichs-Element, mit einer ersten Hülse (1) und einer an und/oder in der ersten Hülse (1) mittels einer Schraubverbindung (3, 4) festlegbaren zweiten Hülse (2), wobei die erste Hülse (1) und die zweite Hülse (2) jeweils einen Durchgang (5) aufweisen, wobei eine Schraube (6) durch die Durchgänge (5) und vorzugsweise durch das Bauteil hindurch in ein Gewinde (7) eines Haltemittels (8) einschraubbar ist, wobei sich die Drehrichtung des Gewindes (3, 4) der Schraubverbindung von der Drehrichtung des Haltemittels (8) unterscheidet, wobei eine mit der zweiten Hülse (2) zusammenwirkende Mitnahmeeinrichtung (9) in den Durchgängen (5) angeordnet ist, wobei die Mitnahmeeinrichtung (9) mit der Schraube (6) zusammenwirken kann und wobei die Mitnahmeeinrichtung (9) durch Einbringen der Schraube (6) in die Durchgänge (5) von einer die Drehung der Hülsen (1, 2) sperrende Sicherungsstellung in eine die Drehung der Hülsen (1, 2) freigebende Öffnungsstellung verbringbar ist
**dadurch gekennzeichnet, dass** ein Sicherungsabschnitt (17) der Mitnahmeeinrichtung (9) in der Sicherungsstellung durch eine Öffnung (18) einer der Hülsen (1, 2) hindurch in eine Ausnehmung (19) der anderen Hülse (1, 2) eingreift und dass der Sicherungsabschnitt (7) durch Einbringen der Schraube (6) in den Durchgang (5) aus der Ausnehmung (19) herausziehbar ist.

2. Vorrichtung nach Anspruch 1, **dadurch gekennzeichnet, dass** ein Bereich (20) der Mitnahmeeinrichtung (9) in der Sicherungsstellung radial in die Durchgänge (5) hineinragt und durch Einbringen der Schraube (6) radial nach außen verbiegbar ist.

3. Vorrichtung nach Anspruch 1 oder 2, **dadurch gekennzeichnet, dass** die Mitnahmeeinrichtung (9) unter Vorspannung in den Durchgängen (5) angeordnet ist.

4. Vorrichtung nach einem der Ansprüche 1 bis 3, **dadurch gekennzeichnet, dass** die Mitnahmeeinrichtung (9) in der Öffnungsstellung kraftschlüssig mit der Schraube (6) verbunden ist.

5. Vorrichtung nach einem der Ansprüche 1 bis 4, **dadurch gekennzeichnet, dass** die Mitnahmeeinrichtung (9) aus einem elastischen Material oder aus einem plastisch verformbaren Material hergestellt ist.

6. Vorrichtung nach einem der Ansprüche 1 bis 5, **dadurch gekennzeichnet, dass** die Mitnahmeeinrichtung (9) aus Metall, beispielsweise aus Federstahl, hergestellt ist.

7. Vorrichtung nach einem der Ansprüche 1 bis 6, **dadurch gekennzeichnet, dass** die Mitnahmeeinrichtung (9) aus einem Blech hergestellt ist.

8. Vorrichtung nach einem der Ansprüche 1 bis 7, **dadurch gekennzeichnet, dass** an einer der Hülsen (1, 2) zumindest ein Haltebereich (22, 23) ausgebildet ist, um die Mitnahmeeinrichtung (9) axial in dieser Hülse (1, 2) zu fixieren.

9. Vorrichtung nach einem der Ansprüche 1 bis 8, **dadurch gekennzeichnet, dass** die Mitnahmeeinrichtung (9) zumindest bereichsweise eine radial nach außen gerichtete Wölbung (21) aufweist.

## Claims

1. Device for securing to a component, in particular a tolerance compensation element, having a first sleeve (1) and a second sleeve (2) which can be secured to and/or in the first sleeve (1) by means of a screw connection (3, 4), wherein the first sleeve (1) and the second sleeve (2) each have a passage (5), wherein a screw (6) can be screwed through the passages (5) and preferably through the component into a thread (7) of a retention means (8), wherein the rotation direction of the thread (3, 4) of the screw connection differs from the rotation direction of the retention means (8), wherein a carrier device (9) which cooperates with the second sleeve (2) is arranged in the passages (5), wherein the carrier device (9) can cooperate with the screw (6) and wherein the carrier device (9) by introducing the screw (6) into the passages (5) can be moved from a securing position which blocks the rotation of the sleeves (1, 2) into an open position which releases the rotation of the sleeves (1, 2),
**characterised in that** a securing portion (17) of the carrier device (9) engages in the securing position through an opening (18) of one of the sleeves (1, 2) into a recess (19) of the other sleeve (1, 2), and **in that** the securing portion (7) can be pulled out of the recess (19) by introducing the screw (6) into the passage (5).

2. Device according to claim 1, **characterised in that** a region (20) of the carrier device (9) in the securing position protrudes radially into the passages (5) and can be bent radially outwards by introducing the screw (6).

3. Device according to claim 1 or 2, **characterised in that** the carrier device (9) is arranged in the passages (5) with pretensioning.

4. Device according to any one of claims 1 to 3, **characterised in that** the carrier device (9) in the open position is connected to the screw (6) in a non-positive-locking manner.

5. Device according to any one of claims 1 to 4, **characterised in that** the carrier device (9) is produced from a resilient material or from a plastically deformable material.

6. Device according to any one of claims 1 to 5, **characterised in that** the carrier device (9) is produced from metal, for example, from spring steel.

7. Device according to any one of claims 1 to 6, **characterised in that** the carrier device (9) is produced from a metal sheet.

8. Device according to any one of claims 1 to 7, **characterised in that** at least one retention region (22, 23) is formed on one of the sleeves (1, 2) in order to fix the carrier device (9) axially in this sleeve (1, 2).

9. Device according to any one of claims 1 to 8, **characterised in that** the carrier device (9) at least partially has a curvature (21) which is directed radially outwards.

## Revendications

1. Dispositif destiné à être fixé à un composant, plus particulièrement un élément de compensation de tolérance, avec un premier manchon (1) et un deuxième manchon (2) pouvant être fixé sur et/ou dans le premier manchon (1) au moyen d'une liaison vissée (3, 4), le premier manchon (1) et le deuxième manchon (2) comprenant chacun un passage (5), une vis (6) pouvant être vissée à travers les passages (5) et de préférence à travers le composant dans un filetage (7) d'un moyen de maintien (8), le sens de rotation du filetage (3, 4) de la liaison vissée étant différent du sens de rotation du moyen de maintien (8), un dispositif d'entraînement (9) interagissant avec le deuxième manchon (2) étant disposé dans les passages (5), le dispositif d'entraînement (9) pouvant interagir avec la vis (6) et le dispositif d'entraînement (9) pouvant être déplacé, par insertion de la vis (6) dans les passages (5), d'une position de sécurité bloquant la rotation des manchons (1, 2) vers une position d'ouverture libérant la rotation des manchons (1, 2),
**caractérisé en ce qu'**une portion de sécurité (17) du dispositif d'entraînement (9) s'emboîte, dans la position de sécurité, à travers une ouverture (18) d'un des manchons (1, 2), dans un évidement (19) de l'autre manchon (1, 2) et **en ce que** la portion de sécurité (7) peut être retirée de l'évidement (19) par insertion de la vis (6) dans le passage (5).

2. Dispositif selon la revendication 1, **caractérisé en ce que**, dans la position de sécurité, une partie (20) du dispositif d'entraînement (9) dépasse radialement dans les passages (5) et peut être pliée radialement vers l'extérieur par insertion de la vis (6).

3. Dispositif selon la revendication 1 ou 2, **caractérisé en ce que** le dispositif d'entraînement (9) est disposé dans les passages (5) sous précontrainte.

4. Dispositif selon l'une des revendications 1 à 3, **caractérisé en ce que**, dans la position d'ouverture, le dispositif d'entraînement (9) est relié par force avec la vis (6).

5. Dispositif selon l'une des revendications 1 à 4, **caractérisé en ce que** le dispositif d'entraînement (9) est constitué d'un matériau élastique ou d'un matériau déformable plastiquement.

6. Dispositif selon l'une des revendications 1 à 5, **caractérisé en ce que** le dispositif d'entraînement (9) est constitué de métal, par exemple d'un acier ressort.

7. Dispositif selon l'une des revendications 1 à 6, **caractérisé en ce que** le dispositif d'entraînement (9) est constitué d'une tôle.

8. Dispositif selon l'une des revendications 1 à 7, **caractérisé en ce que**, sur un des manchons (1, 2) est réalisé au moins une partie de maintien (22, 23) afin de fixer le dispositif d'entraînement (9) axialement dans ce manchon (1, 2).

9. Dispositif selon l'une des revendications 1 à 8, **caractérisé en ce que** le dispositif d'entraînement (9) comprend, au moins à certains endroits, une courbure (21) orientée radialement vers l'extérieur.
